# EUROPEAN PATENT APPLICATION

(11) **EP 1 641 265 A2**
(43) Date of publication of application: **29.03.2006**
(21) Application number: 05020669.7
(22) Date of filing: 22.09.2005
(51) Int. Cl.: H04N 7/16, H04N 5/00, H04H 1/00

(54) **Method and apparatus for storing digital broadcasting data**

(30) Priority: 22.09.2004 KR 2004075882
(71) Applicant: Samsung Electronics Co., Ltd., Suwon-si, Gyeonggi-Do (KR)
(72) Inventor: Kwon, Seong-Geun, Yeongtong-gu Suwon-si, Gyeonggi-do (KR); Joo, Jaw-Il, Yeongtong-gu Suwon-si, Gyeonggi-do (KR)
(74) Representative: Lang, Johannes

(57) **Abstract**

A method and apparatus for storing digital broadcasting data are provided. Predetermined search information input from a user is received. When the search information is input, at least one broadcasting program including the search information is detected from guide data for digital broadcasting programs, and the at least one detected broadcasting program is displayed. Information of at least one broadcasting program selected from among the at least one displayed broadcasting program according to selection information of the user is stored. When a broadcasting start time of the corresponding broadcasting program is reached according to the stored information of the at least one selected broadcasting program, digital broadcasting data of a corresponding broadcasting program is stored. Therefore, the user can easily identify broadcasting programs including the search term among programs to be broadcast for the search period when inputting the search term and the search period, without a need to check a list of broadcasting programs of each channel.

## Description

### BACKGROUND OF THE INVENTION

### 1. Field of the Invention

The present invention relates generally to digital broadcasting. More particularly, the present invention relates to a method and apparatus for receiving and storing digital broadcasting data.

### 1. Description of the Related Art

Conventionally, digital broadcasting, that is, digital multimedia broadcasting, serves to provide a high quality video service using digital data. The digital broadcasting using digital data including video or audio data is different from conventional analog broadcasting using an analog signal. Digital broadcasting is divided into two categories such as satellite digital broadcasting using a satellite and ground wave digital broadcasting using a Very High Frequency (VHF) channel.

A broadcasting station provides digital broadcasting programs and also provides an Electronic Program Guide (EPG) service such that viewers can refer to information on digital broadcasting programs. That is, the EPG service provides information on different types of broadcasting programs capable of being provided to users, broadcasting channels, and broadcasting start and end times of the broadcasting programs, that is referred to as "guide data for digital broadcasting programs".

The guide data for digital broadcasting programs is transmitted through an information data packet along with real broadcasting video data. Here, the information data packet delivers information such as traffic information, weather forecast information, and the like, as well as guide data for digital broadcasting programs.

A digital broadcasting receiver for receiving the guide data generates information for digital broadcasting programs for all broadcasting channels using the guide data. The generated digital broadcasting program information is stored in a memory. When a user desires to output a list of broadcasting programs, the broadcasting program list of a broadcasting channel capable of being currently viewed and listened to by the user is configured and output using the digital broadcasting program information.

One of the important characteristics of digital broadcasting is that the number of available broadcasting channels for the digital broadcasting is greater than that for the conventional analog broadcasting. In the case of conventional analog broadcasting, the number of ground wave channels is approximately 4 or 5. The total number of broadcasting channels using cables or satellites is approximately 50. Because channels for conventional analog broadcasting must use different frequencies, and available frequencies are limited in conventional analog broadcasting, the number of available broadcasting channels is limited.
Because digital broadcasting does not need to use different channel frequencies as in conventional analog broadcasting, it can use more broadcasting channels as compared to conventional analog broadcasting. Accordingly, it is predicted that the number of broadcasting channels capable of being viewed and listened to through the digital broadcasting will significantly increase in the near future.

When it is assumed that the number of digital broadcasting channels capable of being viewed and listened to by users is approximately 200 to 300, there is a problem in that the users must examine broadcasting program lists associated with 200 to 300 channels sequentially from the digital broadcasting program information generated through the guide data for digital broadcasting programs when desiring to find a desired broadcasting program.

Although the users can view and listen to various broadcasting programs through many channels without the restriction of location, they may not view or listen to the digital broadcasting programs according to their state or type (e.g., name or type of program, advertisement, weather, and so on).

In this case, the users store or record digital broadcasting data. A conventional method for recording digital broadcasting data is almost the same as the conventional digital recording method for the analog broadcasting. That is, the users store broadcasting data by directly controlling a storage unit, or store digital broadcasting data for broadcasting start and end times of the user's desired broadcasting data according to a reservation function.

Because the conventional method does not require direct user manipulation, but stores all broadcasting data received for a time period set in a timer, there is a problem in that unnecessary data such as advertisements is stored along with the user's desired broadcasting data.

### SUMMARY OF THE INVENTION

Accordingly, the present invention has been designed to solve the above and other problems occurring in the prior art. Therefore, it is an object of the present invention to provide a method and apparatus for receiving and storing digital broadcasting desired by a user.

It is another object of the present invention to provide a method and apparatus for receiving digital broadcasting that can be conveniently used by a user.

In accordance with an aspect of the present invention, the above and other objects can be accomplished by a method for storing digital broadcasting data. The method comprises the steps of receiving predetermined search information input from a user; detecting at least one broadcasting program including the search information from guide data for digital broadcasting programs to display the at least one detected broadcasting program, when the search information is input; storing information of at least one broadcasting program selected from among the at least one displayed broadcasting program according to selection information of the user; and storing digital broadcasting data of a corresponding broadcasting program, when a broadcasting start time of the corresponding broadcasting program is reached according to the stored information of the at least one selected broadcasting program.

Preferably, the method further includes outputting an alarm, when the broadcasting start time of the selected broadcasting program is reached.

Preferably, the method further includes displaying the stored information of the at least one digital broadcasting program, when the user makes a request.

In accordance with another aspect of the present invention, the above and other objects can be accomplished by an apparatus for receiving digital broadcasting. The apparatus comprises a data reception unit for receiving digital broadcasting data and guide data for digital broadcasting programs; a display unit for outputting the received digital broadcasting data and the received guide data; a detection unit for detecting at least one broadcasting program including predetermined search information from the guide data, when the search information is input according to a user request; a memory for storing information of at least one broadcasting program selected from among the at least one detected broadcasting program according to selection information of the user; and a control unit for controlling the memory to store digital broadcasting data of a corresponding broadcasting program received by the data reception unit, when a broadcasting start time of the corresponding broadcasting program is reached according to the stored information of the at least one selected broadcasting program.

Preferably, the apparatus further includes an alarm output unit for outputting an alarm according to a control operation of the control unit, when the broadcasting start time of the selected broadcasting program is reached.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram illustrating a digital broadcasting receiver in accordance with an embodiment of the present invention;
FIG. 2 is a flow chart illustrating the digital broadcasting receiver's operation in accordance with an embodiment of the present invention;
FIG. 3A to 3E are examples illustrating the digital broadcasting receiver's process for detecting broadcasting programs from guide data for digital broadcasting programs in response to a search information input in accordance with an embodiment of the present invention;
FIG. 4A illustrates the guide data for digital broadcasting programs detected by the digital broadcasting receiver in response to the search information input in accordance with an embodiment of the present invention; and
FIG. 4B is a table illustrating the guide data for digital broadcasting programs of FIG. 4A in accordance with an embodiment of the present invention.

### DETAILED DESCRIPTION OF THE PREFERRED EMBODIMENTS

Embodiments of the present invention will be described in detail herein below with reference to the accompanying drawings. In the following description, a detailed description of known functions and configurations incorporated herein will be omitted for conciseness.

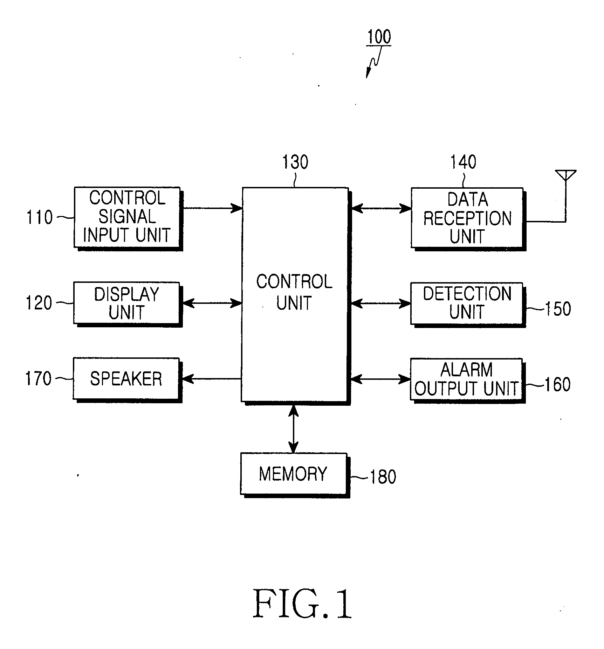

FIG. 1 is a block diagram illustrating a digital broadcasting receiver in accordance with an embodiment of the present invention.

Referring to FIG. 1, a digital broadcasting receiver 100 comprises a control signal input unit 110, a display unit 120, a control unit 130, a data reception unit 140, a detection unit 150, an alarm output unit 160, a speaker 170, and a memory 180.

The control signal input unit 110 transfers, to the control unit 130, a signal corresponding to an external command. That is, the control signal input unit 110 inputs a user manipulation signal such as a key input, and the like. The user manipulation signal can be input information for controlling the control unit 130, or user selection information.

The display unit 120 can be a Liquid Crystal Display (LCD), and the like. The display unit 120 displays digital broadcasting data and guide data for digital broadcasting programs received by the data reception unit 140 according to a control operation of the control unit 130. A user can select a desired broadcasting program through the control signal input unit 110 after viewing the displayed guide data.

The control unit 130 controls overall operation of the digital broadcasting receiver 100 on the basis of a command input through the control signal input unit 110 and an operation program pre-stored in the memory 180 in accordance with the embodiment of the present invention.

When predetermined search information is input through the control signal input unit 110, the control unit 130 controls the detection unit 150 to detect at least one broadcasting program corresponding to the search information from the guide data, and controls the memory 180 to store information of at least one broadcasting program selected by user selection information. The user selection information may be recording reservation information for a specific broadcasting program from among the detected broadcasting programs.

When a broadcasting start time of a predetermined broadcasting program is reached according to broadcasting program information stored in the memory 180, the control unit 130 controls the memory 180 to store digital broadcasting data of a corresponding broadcasting program received by the data reception unit 140. At this point, it is preferred that the control unit 130 generates a folder corresponding to a search term in the memory 180 and controls the memory 180 to store digital broadcasting data including the search term in the folder. The search term indicates a target to be searched for by the user, and can be a person's name such as a singer name, an actor name, or a broadcasting program name of a movie, news, type of program such as sporting event, drama, comedy, news, and documentary or the like.

The data reception unit 140 receives the digital broadcasting data and the guide data for digital broadcasting programs, and then transfers the received data to the control unit 130. The guide data is provided to the digital broadcasting receiver 100 in a predetermined cycle or whenever the guide data is updated.

When predetermined search information is input according to a user request, the detection unit 150 detects at least one broadcasting program including the search information from the guide data. The search information includes a search term indicating a target to be searched for and a search period serving as a time period set to search for at least one broadcasting program.

That is, when the search information including a search term and a search period is input, the detection unit 150 detects at least one broadcasting program to be broadcast for the predetermined time period from the guide data.

When a broadcasting start time of a predetermined broadcasting program is reached according to information stored in the memory 180, the alarm output unit 160 outputs an alarm according to a control operation of the control unit 130.

The speaker 170 outputs audio data of the digital broadcasting data received by the data reception unit 140 according to a control operation of the control unit 130. At this point, the control unit 130 can control the speaker 170 to audibly output the guide data. It should be appreciated by those skilled in the art that the alarm can also be a visual alarm via a light emitting diode, LCD, lamp and the like or a vibratory alarm via vibration of the receiver, without departing from the scope of the present invention.

The memory 180 stores programs necessary for operation of the digital broadcasting receiver 100. More specifically, the memory 180 stores the guide data received by the data reception unit 140 according to a control operation of the control unit 130.

The memory 180 stores information of at least one broadcasting program selected by the user selection information among broadcasting programs detected by the detection unit 150 in response to the search information input. The broadcasting program information includes a program name, a channel number, broadcasting start and end times, broadcasting data capacity, and brief information associated with each broadcasting program.

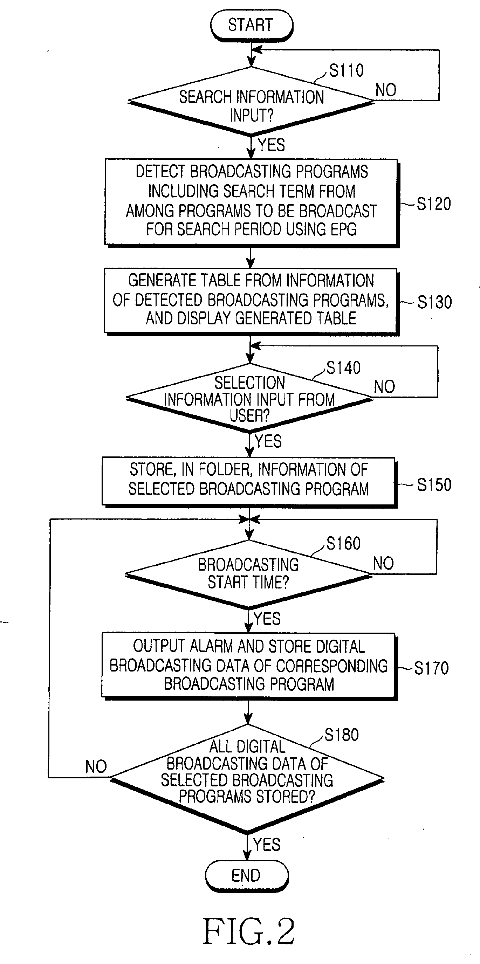

FIG. 2 is a flow chart illustrating the digital broadcasting receiver's operation in accordance with an embodiment of the present invention.

Referring to FIGS. 1 and 2, the control unit 130 determines if the user inputs the search information including a search term indicating a target to be searched for and a search period serving as a time period set to search for at least one broadcasting program at step S 110. Here, it is assumed that the input search information includes a search term of "Entertainer A" and a search period of "1 day" on September 18.

When the search information is input, the control unit 130 controls the detection unit 150 to detect at least one broadcasting program including the search information from among programs to be broadcast for the search period using guide data for digital broadcasting programs at Step S120. At this point, it is preferred that the detection unit 150 sequentially performs a search from Channel 1 to detect at least one broadcasting program including the search information when broadcasting channels are Channel 1 to Channel N. That is, the detection unit 150 detects, from the guide data, broadcasting programs including the search term of "Entertainer A" from among programs of Channels 1 to N to be broadcast for 1 day on September 18 sequentially. At this point, the control unit 130 controls the detection unit 150 to detect broadcasting programs including the search term (i.e., Entertainer A) using a Network Information Table (NIT), a Broadcaster Information Table (BIT), a Service Description Table (SDT), and an Event Information Table (EIT) configuring the guide data. Here, the NIT includes satellite information and a network name. The BIT is used to transmit broadcaster information including a notice, a broadcaster name, a current channel list, etc. The SDT is used to transmit channel information including a channel name, channel Uniform Resource Locator (URL) information, channel type information, and so on. The EIT includes program information containing a program name, URL information, broadcasting time information, a brief description associated with each program, and so on.

It is preferred that the control unit 130 controls the detection unit 150 to detect the broadcasting programs including the search term from among programs to be broadcast sequentially by making use of SDT and EIT information of the guide data.

The control unit 130 generates table information from information of the detected broadcasting programs, and controls the display unit 120 to display the generated table information at step S130. At this point, the control unit 130 generates the table information from the information of the detected broadcasting programs such that the user can easily identify the information of displayed broadcasting programs and can easily select and store a desired broadcasting program.

The control unit 130 determines if user selection information for selecting a predetermined broadcasting program has been input through the control signal input unit 110 such that broadcasting data of the broadcasting programs displayed on the display unit 120 is stored at step S 140.

If the user selection information has been input, the control unit 130 controls the memory 180 to store information of the selected broadcasting program on the basis of the selection information at step S 150. At this point, it is preferred that the control unit 130 generates a folder corresponding to the search term in the memory 180 such that the broadcasting program information stored in the memory 180 is easily displayed when a user request is present. Moreover, it is preferred that the information of the selected broadcasting program is stored in the generated folder.

The control unit 130 checks a current time in a predetermined cycle, and determines if a broadcasting program whose broadcasting start time is reached is present from among broadcasting programs stored in the memory 180 at step S160.

If a broadcasting program whose broadcasting start time is reached is present, the control unit 130 outputs an alarm, and then stores digital broadcasting data of a corresponding broadcasting program received by the data reception unit 140 in the memory 180 at step S170.

The control unit 130 determines if all broadcasting data of broadcasting programs selected by the selection information has been stored at step S 180. If all broadcasting data of broadcasting programs selected by the selection information has been stored in the memory 180, the process is terminated. However, if all broadcasting data of broadcasting programs selected by the selection information has not been stored, the process returns to step S160.
The user can easily search for and store digital broadcasting data of a desired broadcasting program in accordance with an embodiment of the present invention.

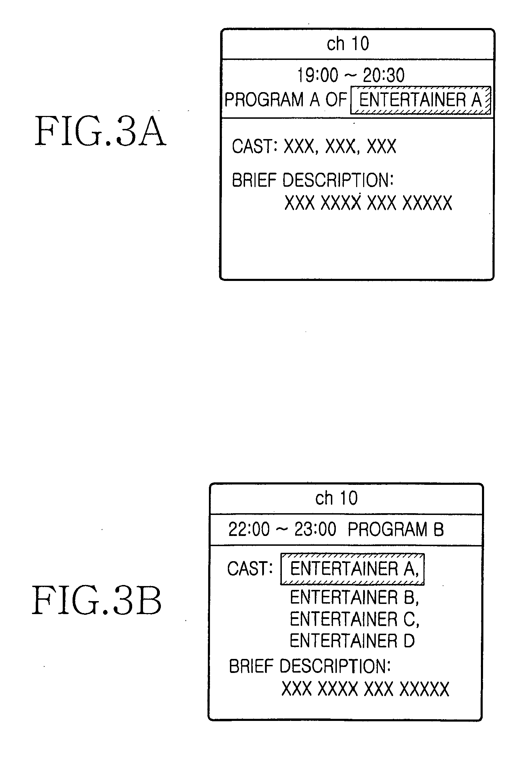

FIG. 3A to 3E are examples illustrating the digital broadcasting receiver's process for detecting broadcasting programs from guide data for digital broadcasting programs in response to a search information input in accordance with an embodiment of the present invention.

That is, FIGS. 3A to 3E illustrate screens displaying broadcasting programs detected by the detection unit 150 of FIG. 1 using the guide data, when the user inputs a search term of "Entertainer A" and a search period of "September 18". In this case, the detection unit 150 detects the broadcasting programs including the search term of "Entertainer A" from among programs to be broadcast for 1 day on September 18 in response to a search information input of the user. That is, the detection unit 150 detects the broadcasting programs including the search term using NIT, BIT, SDT, and EIT information configuring the guide data according to a control operation of the control unit 130.

The detection unit 150 checks broadcasting channel information for 1 day on "September 18" from broadcasting programs listed in the guide data using the SDT information. Then, the detection unit 150 searches names of programs to be broadcast channel by channel and descriptions of the programs, that is, searches the EIT information, to detect broadcasting programs including the search term of "Entertainer A". At this point, it is preferred that the detection unit 150 sequentially performs a search from Channel 1 to detect at least one broadcasting program including the search term when broadcasting channels are Channel 1 to Channel N.

FIG. 3A illustrates a screen for displaying a program name of "Program A of Entertainer A" including the search term of "Entertainer A" to be broadcast from 19:00 to 20:30 from among broadcasting programs on Channel 10 after the detection unit 150 starts a search from Channel 1.

Referring to FIG. 3A, a program description discloses names of entertainers participating in "Program A of Entertainer A" and a brief description on "Program A of Entertainer A". In this case, as the detection unit 150 detects the search term of "Entertainer A" from the program name of "Program A of Entertainer A", it does not need to search the program description.

FIG. 3B illustrates a screen for displaying a program description including the search term of "Entertainer A" in "Program B" to be broadcast from 22:00 to 23:00 from among broadcasting programs on Channel 10 after the detection unit 150 detects "Program A of Entertainer A".

Referring to FIG. 3B, the program description discloses names of entertainers participating in "Program B" and a brief description on "Program B". That is, the detection unit 150 searches names of entertainers participating in "Program B" and identifies the search term of "Entertainer A" from the cast including Entertainer A, Entertainer B, Entertainer C, and Entertainer D in the program description.

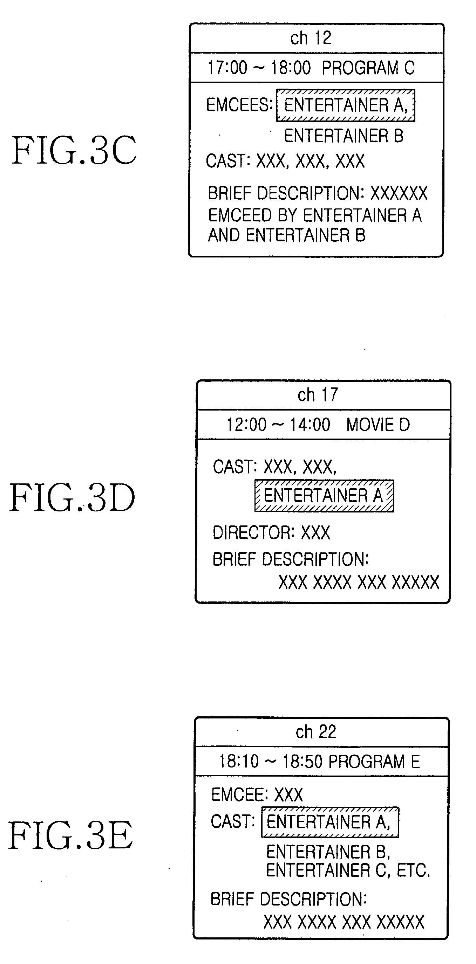

FIG. 3C illustrates a screen for displaying a program description including the search term of "Entertainer A" in "Program C" to be broadcast from 17:00 to 18:00 from among broadcasting programs on Channel 12 while the detection unit 150 re-starts a search from Channel 11 to search for broadcasting programs including the search term of "Entertainer A" after completing a search on Channel 10.

Referring to FIG. 3C, the program description discloses names of program emcees and singers participating in "Program C" and a brief description on "Program C". It can be seen that the search term of "Entertainer A" is included in the program emcee names of "Program C" and the brief description on "Program C".

FIG. 3D illustrates a screen for displaying a program description including the search term of "Entertainer A" in a program of "Movie D" to be broadcast from 12:00 to 14:00 from among broadcasting programs in Channel 17 while the detection unit 150 re-starts a search from Channel 13 to search for broadcasting programs including the search term of "Entertainer A" after completing a search on Channel 12.

Referring to FIG. 3D, the program description discloses names of actors and a director of "Movie D" and a brief description on "Movie D". It can be seen that the search term of "Entertainer A" is included in the names of the actors in "Movie D".

FIG. 3E illustrates a screen for displaying a program description including the search term of "Entertainer A" in "Program E" to be broadcast from 18:10 to 18:50 from among broadcasting programs on Channel 22 while the detection unit 150 re-starts a search from Channel 18 to search for broadcasting programs including the search term of "Entertainer A" after completing a search on Channel 17.

Referring to FIG. 3E, the program description discloses a name of a program emcee and names of entertainers participating in "Program E" and a brief description on "Program E". It can be seen that the search term of "Entertainer A" is included in the names of the entertainers participating in "Program E".

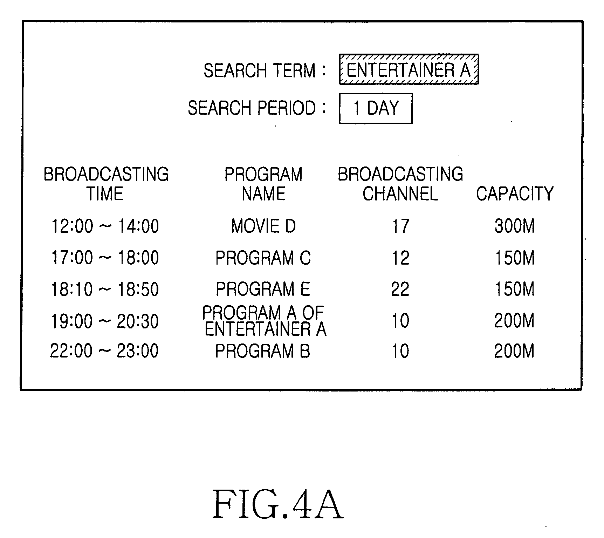

The detection unit 150 transfers a list of detected broadcasting programs illustrated in FIGS. 3A to 3E (i.e., detected guide data for broadcasting programs) to the control unit 130. At this point, the detected guide data transferred to the control unit 130 is illustrated in FIG. 4A.

FIG. 4A illustrates the guide data detected by the digital broadcasting receiver in response to the search information input in accordance with an embodiment of the present invention.

That is, FIG. 4A illustrates a screen for displaying a list of broadcasting programs including a search term detected by the detection unit 150. In this case, the detection unit 150 detects the broadcasting programs including the search term from among broadcasting programs to be broadcast for a search period in response to the search information input including the search term and the search period from the user.

For example, when desiring to search for and store data of broadcasting programs in which "Entertainer A" is in programs to be broadcast for 1 day on September 18, the user inputs a search term of "Entertainer A" and a search period of "September 18" or "1 day". In this case, the detection unit 150 detects information about broadcasting channels, broadcasting times, broadcasting data capacities associated with broadcasting programs including the search term of "Entertainer A" from among programs to be broadcast for 1 day on September 18 as illustrated in FIG. 4A, and then transfers the detected information to the control unit 130.

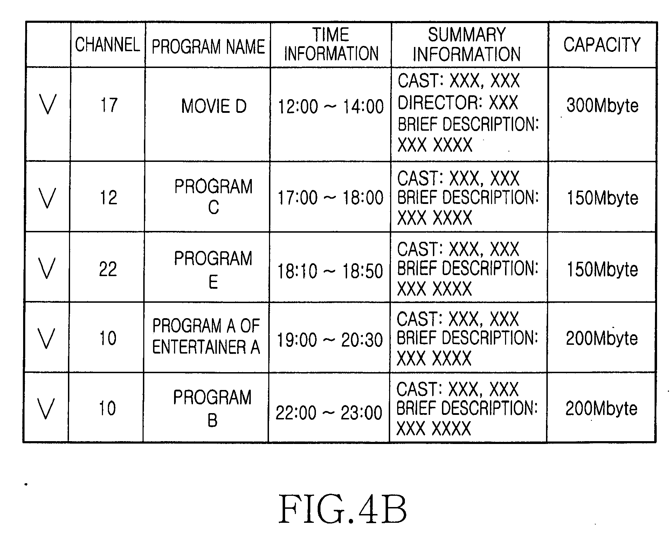

When receiving the information as illustrated in FIG. 4A from the detection unit 150, the control unit 130 generates table information as illustrated in FIG. 4B and controls the display unit 120 to display the generated table information. At this point, the control unit 130 generates the table information from the information of detected broadcasting programs such that the user can easily identify the information of displayed broadcasting programs and can easily select and store a desired broadcasting program.

FIG. 4B is a table illustrating the guide data for digital broadcasting programs of FIG. 4A detected by the detection unit 150 of the digital broadcasting receiver in accordance with an embodiment of the present invention.

That is, FIG. 4B illustrates a screen for displaying table information that the control unit 130 generates from the broadcasting program information transferred by the detection unit 150 such that the user can easily select a desired broadcasting program.

The table information includes a channel number, a program name, broadcasting time information, summary information and data capacity information associated with each broadcasting program.

When the user selects "Movie D" of Channel 17, "Program C" of Channel 12, "Program E" of Channel 22, "Program A of Entertainer A" of Channel 10, and "Program B" of Channel 10, and inputs an OK key, the control unit 130 stores information of the selected broadcasting programs in an "Entertainer A" folder of the memory 180.

As apparent from the above description, the present invention provides a digital broadcasting reception method and apparatus for storing a user's desired broadcasting data, such that the user can easily identify broadcasting programs including a search term among programs to be broadcast for a search period when inputting the search term and the search period, without a need to check a list of broadcasting programs of each channel.

Moreover, the present invention can increase the convenience for users by providing a digital broadcasting reception method and apparatus that can easily store desired broadcasting data of the users.

Although certain embodiments of the present invention have been disclosed for illustrative purposes, those skilled in the art will appreciate that various modifications, additions and substitutions are possible, without departing from the scope of the present invention. Therefore, the present invention is not limited to the above-described embodiments, but is defined by the following claims, along with their full scope of equivalents.

## Claims

1. A method for storing digital broadcasting data, comprising:
receiving predetermined search information input from a user;
detecting at least one broadcasting program comprising the search information from guide data for digital broadcasting programs to display the at least one detected broadcasting program, when the search information is input;
storing information of at least one broadcasting program selected from among the at least one displayed broadcasting program according to selection information of the user; and
storing digital broadcasting data of a corresponding broadcasting program, when a broadcasting start time of the corresponding broadcasting program is reached according to the stored information of the at least one selected broadcasting program.

2. The method according to claim 1, wherein the search information includes a search term indicating a target to be searched for, and a search period serving as a time period set to search for the at least one broadcasting program.

3. The method according to claim 1, wherein displaying comprises:
detecting the at least one broadcasting program including the search information from among programs to be broadcast for the set search period using the guide data, when the search information is input; and
generating table information from the at least one detected broadcasting program, and displaying the generated table information.

4. The method according to claim 2, wherein displaying comprises:
detecting the at least one broadcasting program comprising the search information from among programs to be broadcast for the set search period using the guide data, when the search information is input; and
generating table information from the at least one detected broadcasting program, and displaying the generated table information.

5. The method according to claim 3, wherein the generated table information includes a program name, a channel number, broadcasting start and end times, broadcasting data capacity, and summary information associated with each of the at least one detected broadcasting program.

6. The method according to claim 4, wherein the generated table information includes a program name, a channel number, broadcasting start and end times, broadcasting data capacity, and summary information associated with each of the at least one detected broadcasting program.

7. The method according to claim 1, wherein storing the information of the at least one selected broadcasting program comprises:
selecting a predetermined broadcasting program to store broadcasting data of the at least one displayed broadcasting program according to the selection information of the user; and
storing information of the selected broadcasting program.

8. The method according to claim 1, further comprising:
outputting an alarm, when the broadcasting start time of the corresponding broadcasting program is reached.

9. The method according to claim 1, further comprising:
displaying the stored information of the at least one digital broadcasting program, when the user makes a request.

10. An apparatus for receiving digital broadcasting, comprising:
a data reception unit for receiving digital broadcasting data and guide data for digital broadcasting programs;
a display unit for outputting the received digital broadcasting data and the received guide data;
a detection unit for detecting at least one broadcasting program including predetermined search information from the guide data, when the search information is input according to a user request;
a memory for storing information of at least one broadcasting program selected from among the at least one detected broadcasting program according to selection information of the user; and
a control unit for controlling the memory to store digital broadcasting data of a corresponding broadcasting program received by the data reception unit, when a broadcasting start time of the corresponding broadcasting program is reached according to the stored information of the at least one selected broadcasting program.

11. The apparatus according to claim 10, wherein the detection unit detects the at least one broadcasting program including a search term from among programs to be broadcast for a search period using the guide data, when the search information is input which includes the search term indicating a target to be searched for, and the search period serving as a time period set to search for the at least one broadcasting program.

12. The apparatus according to claim 10, wherein the control unit generates table information from information of the at least one broadcasting program detected by the detection unit, and controls the display unit to display the generated table information.

13. The apparatus according to claim 12, wherein the control unit controls the memory to store information of a predetermined broadcasting program selected by the selection information, when the selection information of the user for storing broadcasting data of displayed broadcasting programs is input.

14. The apparatus according to claim 12, wherein the generated table information includes a program name, a channel number, broadcasting start and end times, broadcasting data capacity, and summary information associated with each of the at least one detected broadcasting program.

15. The apparatus according to claim 13, wherein the control unit generates the table information from the information of the at least one broadcasting program stored in the memory, and controls the display unit to display the generated table information.

16. The apparatus according to claim 10 further comprising:
an alarm output unit for outputting an alarm according to a control operation of the control unit, when the broadcasting start time of the corresponding broadcasting program is reached.

17. The apparatus according to claim 16, wherein the alarm comprises at least one of an audible, visual and vibratory alarm.
